# EUROPÄISCHE PATENTSCHRIFT

(11) **EP 3 736 878 B1**
(45) Veröffentlichungstag und Bekanntmachung des Hinweises auf die Patenterteilung: **10.04.2024**
(21) Anmeldenummer: 19173780.8
(22) Anmeldetag: 10.05.2019
(51) Int. Cl.: H01M 10/48, H01M 10/6235, H01M 50/211, H01M 50/291, H01M 50/569, H01M 50/247, H01M 10/42

(54) **AKKUPACK UND BEARBEITUNGSSYSTEM**
BATTERY PACK AND PROCESSING SYSTEM
BLOC D'ACCUMULATEUR ET SYSTÈME D'USINAGE

(43) Veröffentlichungstag der Anmeldung: 11.11.2020
(73) Patentinhaber: Andreas Stihl AG & Co. KG, 71336 Waiblingen (DE); Murata Manufacturing Co., Ltd., Nagaokakyo-shi, Kyoto 617-8555 (JP)
(72) Erfinder: SAUERTEIG, Daniel, 71394 Kernen im Remstal (DE); SCHOLL, Julien, 71336 Waiblingen (DE); OZAWA, Kenichi, Koriyama-shi, 963-0531 (JP); SATO, Takayuki, Koriyama-shi, 963-0531 (JP); MISAWA, Daiki, Koriyama-shi, 963-0531 (JP); KONO, Yosuke, Koriyama-shi, 963-0531 (JP); KURATSUKA, Masaki, Koriyama-shi, 963-0531 (JP)
(74) Vertreter: Patentanwälte Ruff, Wilhelm, Beier, Dauster & Partner mbB

(56) Entgegenhaltungen:
- DE-A1-102012 207 999
- DE-A1-102015 208 252
- JP-A- 2013 012 458
- KR-A- 20160 032 843
- US-A1- 2018 062 127

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung und auf ein Bearbeitungssystem aufweisend einen solchen Akkupack und ein elektrisch angetriebenes Bearbeitungsgerät.

Die DE 10 2012 207 999 A1 offenbart eine Hüllfolie für ein galvanisches Element. Die Hüllfolie weist mindestens einen Kraftsensor zum Erfassen eines Dehnungszustands der Hüllfolie auf.

Die KR 2016 0032843 A offenbart ein Batteriemodul mit verbesserter Sicherheit und einen Batteriepack aufweisend ein solches.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, wobei der Akkupack verbesserte Eigenschaften aufweist, insbesondere eine relativ lange Lebensdauer hat, und eines Bearbeitungssystems aufweisend einen solchen Akkupack und ein elektrisch angetriebenes Bearbeitungsgerät zugrunde.

Die Erfindung löst die Aufgabe durch die Bereitstellung eines Akkupacks mit den Merkmalen des Anspruchs 1 und eines Bearbeitungssystems mit den Merkmalen des Anspruchs 13. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist eine erste Stapelbegrenzungsstruktur, eine zweite Stapelbegrenzungsstruktur, mehrere Pouchzellen und eine Sensoranordnung auf. Die zweite Stapelbegrenzungsstruktur ist zu der ersten Stapelbegrenzungsstruktur mit einem festen Abstand gegenüberliegend angeordnet. Die Pouchzellen sind in einem Stapel, insbesondere auf- bzw. übereinander, angeordnet. Der Stapel ist zwischen der ersten Stapelbegrenzungsstruktur und der zweiten Stapelbegrenzungsstruktur angeordnet. Eine Höhe des Stapels in einer Stapelrichtung ist durch die erste Stapelbegrenzungsstruktur und die zweite Stapelbegrenzungsstruktur, insbesondere ihren festen Abstand, begrenzt. Die Sensoranordnung ist in dem Stapel angeordnet. Des Weiteren erstreckt die Sensoranordnung sich über einen Großteil einer Fläche der Pouchzellen und ist derart ausgebildet bzw. konfiguriert, dass die Höhe des Stapels über die Erstreckung etwa gleich ist. Außerdem weist die Sensoranordnung einen, insbesondere elektrischen, Drucksensor auf. Der Drucksensor ist zur, insbesondere automatischen, Erfassung, insbesondere Messung, einer Druckkraft in der Stapelrichtung wirkend auf die Pouchzellen ausgebildet bzw. konfiguriert. Großteil der Fläche bedeutet mindestens 70 Prozent (%), insbesondere mindestens 80 %, insbesondere mindestens 90 %, der Fläche.

Der Drucksensor ermöglicht ein Aufblähen, soweit vorhanden, der Pouchzellen in der Stapelrichtung zu erfassen, insbesondere zu messen. Insbesondere kann das Aufblähen zusammen mit der begrenzten Höhe des Stapels einen Aufbau der Druckkraft verursachen.

Des Weiteren ermöglichen die Erstreckung über den Großteil der Fläche der Pouchzellen und die etwa gleiche Höhe des Stapels über die Erstreckung eine, insbesondere nachteilhafte, Einwirkung der Sensoranordnung auf die Pouchzellen, insbesondere flexible Außenhüllen der Pouchzellen, gering zu halten oder sogar ganz zu vermeiden. Insbesondere kann eine, insbesondere lokale, Verformung und somit eine, lokale, Belastung der Pouchzellen gering gehalten oder sogar ganz vermieden werden.

Dies ermöglicht eine relativ lange Lebensdauer der Pouchzellen und somit des Akkupacks.

Insbesondere kann fester Abstand bedeuten, dass der Abstand zwischen der ersten Stapelbegrenzungsstruktur und der zweiten Stapelbegrenzungsstruktur sich kaum oder nicht im Vergleich zu Zelldicken der Pouchzellen in der Stapelrichtung verändern kann, insbesondere bei einem Aufblähen der Pouchzellen. Zusätzlich oder alternativ kann die zweite Stapelbegrenzungsstruktur, insbesondere mit einer Hauptebene, parallel zu der ersten Stapelbegrenzungsstruktur, insbesondere einer Hauptebene der ersten Stapelbegrenzungsstruktur, angeordnet sein.

Die Pouchzellen können zur Versorgung des Bearbeitungsgeräts mit der Antriebsleistung ausgebildet sein. Zusätzlich oder alternativ können die Pouchzellen Akkumulatorzellen bzw. jeweils einzelne wiederaufladbare Speicherelemente für elektrische Energie auf elektrochemischer Basis sein. Insbesondere können die Pouchzellen Lithium-Ionen-Akkumulatorzellen sein. Weiter zusätzlich oder alternativ können die Pouchzellen elektrisch zusammengeschaltet sein, insbesondere seriell oder parallel geschaltet sein. Weiter zusätzlich oder alternativ können die Pouchzellen Flachzellen sein. Weiter zusätzlich oder alternativ kann die Fläche der Pouchzellen rechteckig sein. Weiter zusätzlich oder alternativ können die Pouchzellen gleich, insbesondere typ- und/oder baugleich, sein. Weiter zusätzlich oder alternativ kann der Stapel quaderförmig sein.

Die Pouchzellen können in dem Stapel mit einer jeweiligen Hauptebene parallel zueinander und/oder orthogonal zu der Stapelrichtung und/oder parallel zu der ersten Stapelbegrenzungsstruktur, insbesondere einer Hauptebene der ersten Stapelbegrenzungsstruktur, und/oder parallel zu der zweiten Stapelbegrenzungsstruktur, insbesondere einer Hauptebene der zweiten Stapelbegrenzungsstruktur, angeordnet sein. Zusätzlich oder alternativ kann der Stapel mit der Stapelrichtung orthogonal zu der ersten Stapelbegrenzungsstruktur, insbesondere einer Hauptebene der ersten Stapelbegrenzungsstruktur, und/oder der zweiten Stapelbegrenzungsstruktur, insbesondere einer Hauptebene der zweiten Stapelbegrenzungsstruktur, angeordnet sein. Weiter zusätzlich oder alternativ kann der Abstand in der Stapelrichtung sein. Weiter zusätzlich oder alternativ kann die Höhe dem Abstand entsprechen, insbesondere gleichen.

Die Sensoranordnung kann ganz oben in dem Stapel bzw. an einer Oberseite des Stapels oder ganz unten in dem Stapel bzw. an einer Unterseite des Stapels angeordnet sein. Zusätzlich oder alternativ kann die Sensoranordnung sich über die komplette Fläche der Pouchzellen erstrecken. Weiter zusätzlich oder alternativ kann die Sensoranordnung über die Erstreckung Lücken aufweisen. Weiter zusätzlich oder alternativ kann etwa gleich eine Abweichung von maximal 5 %, insbesondere von maximal 2 %, insbesondere von maximal 1 %, bedeuten. Weiter zusätzlich oder alternativ kann die Höhe über die Erstreckung gleich bzw. homogen sein. Weiter zusätzlich oder alternativ kann die Sensoranordnung zwischen einer der Stapelbegrenzungsstrukturen und einer der Pouchzellen oder zwischen zwei der Pouchzellen angeordnet und derart ausgebildet sein, dass ein Abstand zwischen der Stapelbegrenzungsstruktur und der Pouchzelle oder zwischen den zwei Pouchzellen über die Erstreckung etwa gleich sein kann. Weiter zusätzlich oder alternativ kann die Sensoranordnung eine, insbesondere etwa, gleiche, insbesondere konstante, Anordnungsdicke in der Stapelrichtung über die Erstreckung aufweisen. Weiter zusätzlich oder alternativ kann die Sensoranordnung rechteckig sein.

Der Drucksensor kann zur Erfassung der Druckkraft orthogonal zu der Fläche und/oder der Hauptebenen wirkend auf die Pouchzellen ausgebildet sein. Zusätzlich oder alternativ kann der Drucksensor zur qualitativen Erfassung der Druckkraft, insbesondere als mechanischer Schalter, oder sogar zur quantitativen Messung der Druckkraft, insbesondere eines Werts der Druckkraft, ausgebildet sein.

In einer Weiterbildung der Erfindung ist die Sensoranordnung einstückig bzw. einteilig ausgebildet bzw. konfiguriert. Insbesondere kann die Sensoranordnung eine gleiche, insbesondere konstante, Anordnungsdicke in der Stapelrichtung über die Erstreckung aufweisen.

In einer Weiterbildung der Erfindung weist die Sensoranordnung einen Ausgleichsabstandshalter auf. Der Ausgleichsabstandshalter ist in dem Stapel angeordnet. Des Weiteren ist der Ausgleichsabstandshalter getrennt von dem Drucksensor ausgebildet bzw. konfiguriert. Außerdem weist der Ausgleichsabstandshalter eine Sensoraussparung auf. Der Drucksensor ist in der Sensoraussparung angeordnet bzw. aufgenommen. Eine Abstandshalterdicke des Ausgleichsabstandshalters und eine Sensordicke des Drucksensors in der Stapelrichtung sind etwa gleich. Die Abstandshalterdicke ermöglicht die Sensordicke auszugleichen. Insbesondere kann die Sensordicke gleich oder etwas größer als die Abstandshalterdicke sein, z.B. 0,1 Millimeter. Dies kann ermöglichen, dass mit Toleranzen der Drucksensor bündig zum Ausgleichsabstandshalter sein kann. Zusätzlich oder alternativ kann die Sensoranordnung mehrstückig bzw. mehrteilig ausgebildet sein.

In einer Weiterbildung der Erfindung weist die Sensoranordnung eine Folie auf, insbesondere ist eine Folie. Insbesondere kann bei einstückiger Ausbildung der Sensoranordnung diese eine Folie sein. Zusätzlich oder alternativ können/kann bei mehrstückiger Ausbildung der Sensoranordnung der Ausgleichsabstandshalter und/oder der Drucksensor, insbesondere jeweils, eine Folie sein.

In einer Weiterbildung der Erfindung weist die Sensoranordnung einen, insbesondere elektrischen und/oder inneren, Temperatursensor auf. Der Temperatursensor ist zur, insbesondere automatischen, Messung einer, insbesondere inneren, Temperatur, insbesondere eines Werts der Temperatur, des Stapels ausgebildet bzw. konfiguriert. Die Sensoranordnung ermöglicht einen Synergieeffekt. Insbesondere kann der, insbesondere innere, Temperatursensor ein Heißleiter (Englisch: Negative temperature coefficient thermistor) sein.

In einer Weiterbildung der Erfindung ist die Sensoranordnung zwischen zwei, insbesondere in der Stapelrichtung mittigen, der Pouchzellen angeordnet.

Zusätzlich oder alternativ sind/ist der Drucksensor und/oder der, insbesondere innere, Temperatursensor, soweit vorhanden, in einer Mitte der Fläche der Pouchzellen angeordnet.

Dies ermöglicht die Erfassung, insbesondere Messung, an einer Stelle, an welcher die Druckkraft am größten und/oder die, insbesondere innere, Temperatur am höchsten bzw. heißesten sein kann.

Insbesondere kann in einer Mitte der Mitte näher als einem Rand bedeuten, insbesondere maximal 20 Millimeter (mm), insbesondere maximal 10 mm, insbesondere maximal 5 mm, zu der Mitte beabstandet.

In einer Weiterbildung der Erfindung weist der Akkupack einen, insbesondere elektrischen, äußeren Temperatursensor auf. Der äußere Temperatursensor ist zur, insbesondere automatischen, Messung einer äußeren Temperatur, insbesondere eines Werts der Temperatur, des Stapels außerhalb des Stapels an einem Rand bzw. einer Kante, insbesondere einer Ecke, des Stapels, der ersten Stapelbegrenzungsstruktur oder der zweiten Stapelbegrenzungsstruktur und/oder außerhalb der ersten Stapelbegrenzungsstruktur oder der zweiten Stapelbegrenzungsstruktur angeordnet und ausgebildet bzw. konfiguriert. Dies ermöglicht die Messung an einer Stelle, an welcher die äußere Temperatur am niedrigsten bzw. kältesten sein kann. Insbesondere kann der äußere Temperatursensor von dem inneren Temperatursensor, soweit vorhanden, verschieden sein. Zusätzlich oder alternativ kann der äußere Temperatursensor an einem Rand, insbesondere einer Ecke, einer äußersten der Pouchzellen angeordnet sein. Zusätzlich oder alternativ kann an einem Rand oder einer Ecke dem Rand oder der Ecke näher als einer Mitte bedeuten, insbesondere maximal 20 mm, insbesondere maximal 10 mm, insbesondere maximal 5 mm, zu dem Rand oder der Ecke beabstandet. Weiter zusätzlich oder alternativ kann der äußere Temperatursensor ein Heißleiter (Englisch: Negative temperature coefficient thermistor) sein.

In einer Weiterbildung der Erfindung weist der Akkupack eine, insbesondere elektrische, Steuerungseinrichtung auf. Die Steuerungseinrichtung ist zur, insbesondere automatischen, Steuerung des Akkupacks in Abhängigkeit von der erfassten, insbesondere gemessenen, Druckkraft und/oder der gemessenen, insbesondere inneren, Temperatur, soweit vorhanden, und/oder der gemessenen äußeren Temperatur, soweit vorhanden, ausgebildet bzw. konfiguriert. Dies ermöglicht sicherheitskritische Zustände der Pouchzellen und somit des Akkupacks gering zu halten oder sogar ganz zu vermeiden. Insbesondere kann die Steuerungseinrichtung zur Steuerung, insbesondere Beendigung, der Abgabe der elektrischen Antriebsleistung von dem Akkupack und/oder einer Aufnahme einer elektrischen Ladeleistung durch den Akkupack ausgebildet sein. Zusätzlich oder alternativ kann die Steuerungseinrichtung zur Ermittlung eines Gesundheitszustands (Englisch: State of health) des Akkupacks in Abhängigkeit von der Druckkraft und/oder der, insbesondere inneren, Temperatur, und/oder der äußeren Temperatur und zur Steuerung des Akkupacks in Abhängigkeit von dem ermittelten Gesundheitszustand ausgebildet sein.

In einer Ausgestaltung der Erfindung weist der Akkupack eine, insbesondere elektrische, Leistungsabgabe- und/oder Leistungsaufnahmeerfassungseinrichtung auf. Die Leistungsabgabe- und/oder Leistungsaufnahmeerfassungseinrichtung ist zur, insbesondere automatischen, Erfassung der abgegebenen elektrischen Antriebsleistung von dem Akkupack und/oder einer, insbesondere der, aufgenommenen elektrischen Ladeleistung durch den Akkupack über der Zeit ausgebildet bzw. konfiguriert. Die Steuerungseinrichtung ist zum, insbesondere automatischen, Vergleich der erfassten, insbesondere gemessenen, Druckkraft und/oder einer auf der erfassten Druckkraft basierenden Größe mit einem veränderlichen Druckgrenzwert und zur, insbesondere automatischen, Steuerung des Akkupacks in Abhängigkeit von einem Ergebnis des Vergleichs ausgebildet bzw. konfiguriert. Des Weiteren ist die Steuerungseinrichtung zur, insbesondere automatischen, Veränderung, insbesondere Erhöhung, des Druckgrenzwerts in Abhängigkeit von der erfassten abgegebenen Antriebsleistung und/oder der erfassten aufgenommenen Ladeleistung über der Zeit ausgebildet bzw. konfiguriert. Dies ermöglicht ein leichtes, insbesondere unkritisches, Aufblähen, soweit vorhanden, der Pouchzellen verursacht durch, insbesondere gebrauchsbedingte, Alterung zu berücksichtigen. Insbesondere kann der Druckgrenzwert von mindestens einer der Pouchzellen vorgegeben sein. Zusätzlich oder alternativ kann die Steuerungseinrichtung zur Steuerung, insbesondere Beendigung, der Abgabe der elektrischen Antriebsleistung von dem Akkupack und/oder der Aufnahme der elektrischen Ladeleistung durch den Akkupack bei Erreichung oder Überschreitung des Druckgrenzwerts durch die erfasste, insbesondere gemessene, Druckkraft und/oder die auf der erfassten Druckkraft basierende Größe ausgebildet sein.

In einer Weiterbildung der Erfindung weist der Akkupack mindestens ein Pufferelement auf. Das mindestens eine Pufferelement ist in dem Stapel angeordnet. Des Weiteren erstreckt das mindestens eine Pufferelement sich über einen Großteil der Fläche der Pouchzellen und ist dazu ausgebildet bzw. konfiguriert, über eine Pufferdicke des mindestens einen Pufferelements ein Aufblähen, soweit vorhanden, der Pouchzellen in der Stapelrichtung zu puffern. Dies ermöglicht ein leichtes, insbesondere unkritisches, Aufblähen, soweit vorhanden, der Pouchzellen verursacht durch Alterung aufzunehmen bzw. zu kompensieren. Insbesondere kann das mindestens eine Pufferelement ein Schaumstoff, insbesondere Moosgummi, aufweisen, insbesondere sein. Zusätzlich oder alternativ kann das mindestens eine Pufferelement eine thermische Isolierung sein, wobei die mindestens eine thermische Isolierung jeweils zwischen zwei der Pouchzellen angeordnet sein kann.

In einer Weiterbildung der Erfindung weist der Akkupack ein, insbesondere massives, Stapelgehäuse auf. Die erste Stapelbegrenzungsstruktur ist eine erste Gehäusewand des Stapelgehäuses und die zweite Stapelbegrenzungsstruktur ist eine zweite Gehäusewand des Stapelgehäuses. Dies ermöglicht bei einem Platzen der Pouchzellen eine mechanische Belastung umliegender Teile gering zu halten oder sogar ganz zu vermeiden. Insbesondere kann das Stapelgehäuse quaderförmig sein. Zusätzlich oder alternativ kann das Stapelgehäuse teilweise oder sogar vollständig aus Aluminium bestehen.

In einer Weiterbildung der Erfindung weist der Akkupack, insbesondere weisen die Pouchzellen, eine maximale elektrische Antriebsleistung von minimal 1 Kilowatt (kW), insbesondere von minimal 2 kW, und/oder von maximal 10 kW, insbesondere von maximal 5 kW, auf.

Zusätzlich oder alternativ weist der Akkupack, insbesondere weisen die Pouchzellen, eine, insbesondere elektrische, Nennspannung von minimal 10 Volt (V), insbesondere von minimal 20 V, und/oder von maximal 100 V, insbesondere von maximal 50 V, auf.

Zusätzlich oder alternativ weist der Akkupack, insbesondere weisen die Pouchzellen, einen, insbesondere elektrischen, maximalen Energieinhalt von minimal 100 Wattstunden (Wh), insbesondere von minimal 200 Wh, und/oder von maximal 1000 Wh, insbesondere von maximal 500 Wh, auf.

Zusätzlich oder alternativ weist der Akkupack eine Masse von minimal 0,5 Kilogramm (kg), insbesondere von minimal 1 kg, und/oder von maximal 10 kg, insbesondere von maximal 5 kg, auf.

Zusätzlich oder alternativ weist der Akkupack eine Höhe, insbesondere in der Stapelrichtung, von minimal 2,5 Zentimeter (cm) und/oder von maximal 10 cm, und/oder eine Breite von minimal 5 cm und/oder von maximal 20 cm, und/oder eine Tiefe von minimal 7,5 cm und/oder von maximal 30 cm auf.

Das erfindungsgemäße Bearbeitungssystem weist einen, insbesondere den, Akkupack wie zuvor beschrieben und ein, insbesondere das, elektrisch angetriebenes Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät in Form einer Säge, eines Trennschleifers und eines Blasgeräts,
- Fig. 2: eine Explosionsansicht des Akkupacks der Fig. 1,
- Fig. 3: eine Perspektivansicht einer ersten Stapelbegrenzungsstruktur des Akkupacks der Fig. 1,
- Fig. 4: eine Perspektivansicht der ersten Stapelbegrenzungsstruktur, von Pouchzellen und einer Sensoranordnung des Akkupacks der Fig. 1,
- Fig. 5: eine Perspektivansicht der ersten Stapelbegrenzungsstruktur, von Pouchzellen und der Sensoranordnung angeordnet in einem Stapel des Akkupacks der Fig. 1,
- Fig. 6: eine Perspektivansicht der ersten Stapelbegrenzungsstruktur, des Stapels und einer zweiten Stapelbegrenzungsstruktur des Akkupacks der Fig. 1,
- Fig. 7: eine Perspektivansicht der ersten Stapelbegrenzungsstruktur, des Stapels, der zweiten Stapelbegrenzungsstruktur und eines Teils einer Steuerungseinrichtung des Akkupacks der Fig. 1,
- Fig. 8: eine Perspektivansicht der ersten Stapelbegrenzungsstruktur, des Stapels, der zweiten Stapelbegrenzungsstruktur und der Steuerungseinrichtung des Akkupacks der Fig. 1,
- Fig. 9: eine Perspektivansicht von einer Rückseite der ersten Stapelbegrenzungsstruktur, des Stapels, der zweiten Stapelbegrenzungsstruktur, der Steuerungseinrichtung und eines äußeren Temperatursensors des Akkupacks der Fig. 1,
- Fig. 10: eine Perspektivansicht des äußeren Temperatursensors und eines Akkupackkontaktträgers des Akkupacks der Fig. 1,
- Fig. 11: eine Perspektivansicht eines Akkupackgehäuses des Akkupacks der Fig. 1, und
- Fig. 12: eine alternative Sensoranordnung des Akkupacks der Fig. 1.

### DETAILLIERTE BESCHREIBUNG DER AUSFÜHRUNGSBEISPIELE

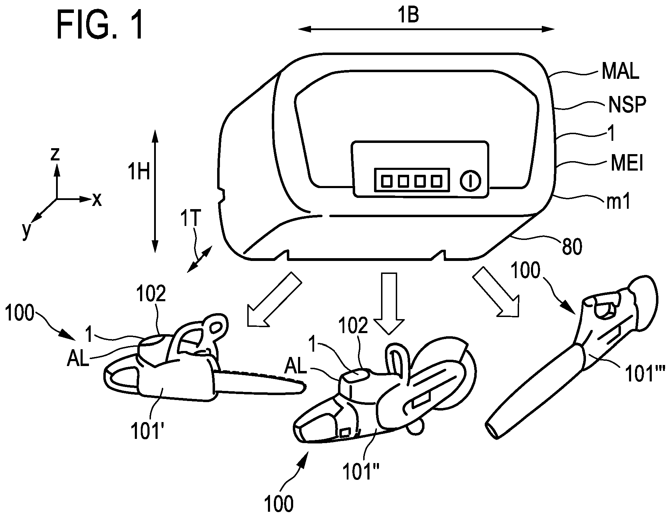

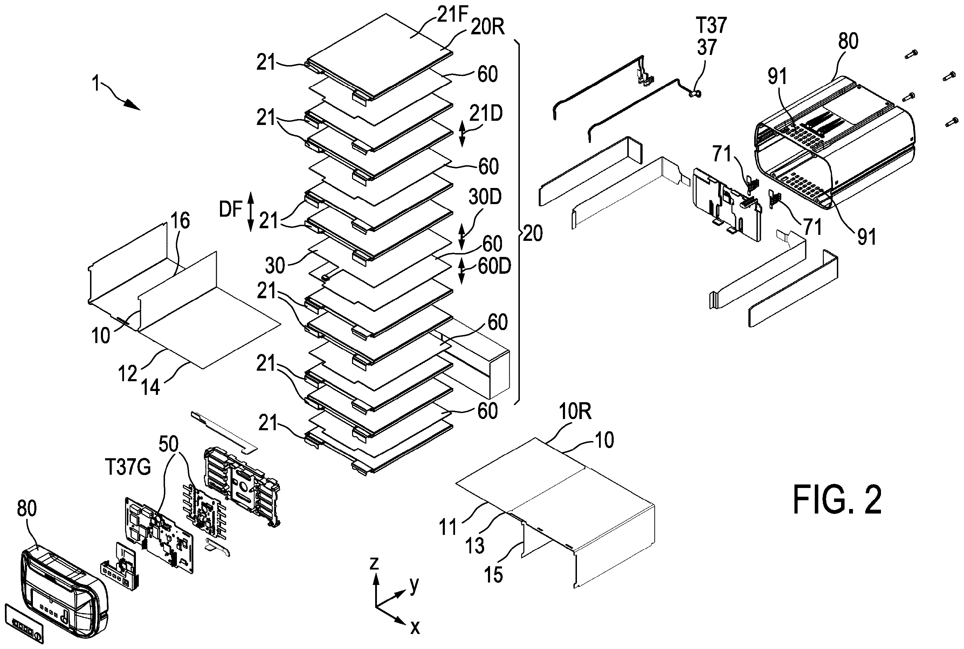

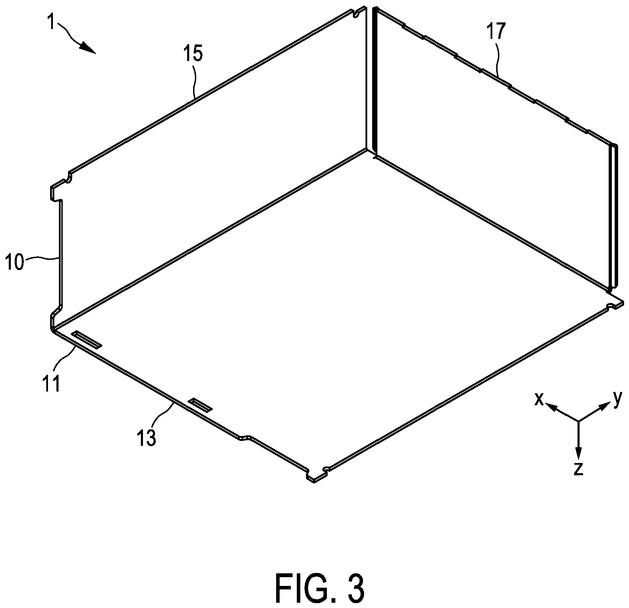

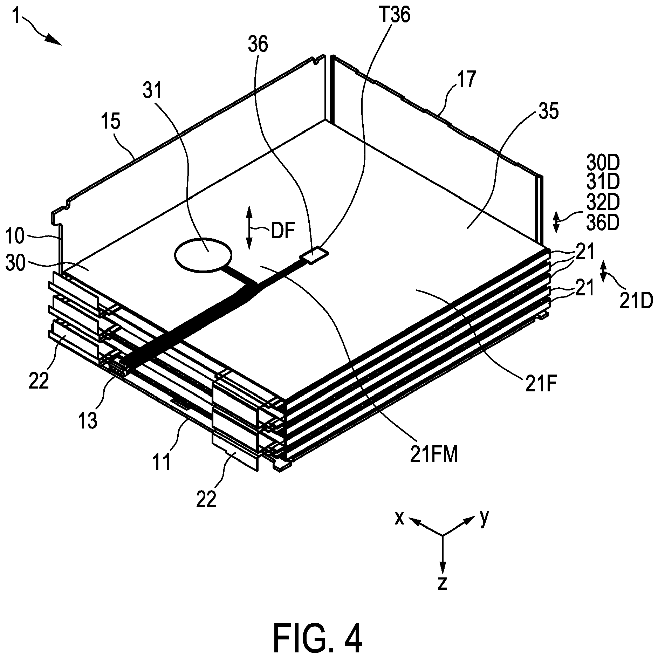

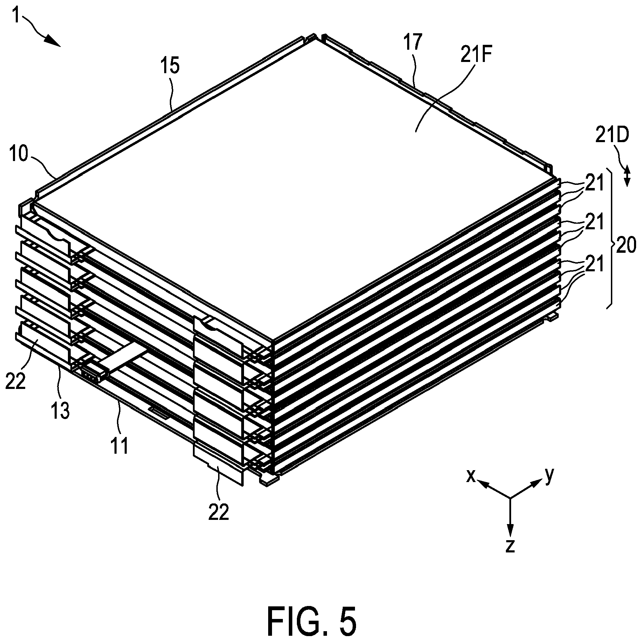

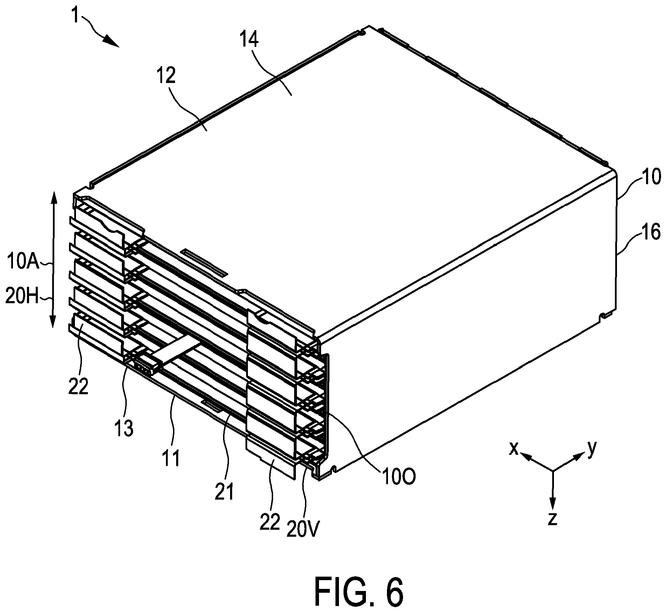

Fig. 1 bis 12 zeigen einen erfindungsgemäßen Akkupack 1 zur Versorgung eines elektrisch angetriebenen Bearbeitungsgeräts 101 mit elektrischer Antriebsleistung AL. Der Akkupack 1 weist eine erste Stapelbegrenzungsstruktur 13, eine zweite Stapelbegrenzungsstruktur 14, mehrere Pouchzellen 21 und eine Sensoranordnung 30 auf. Die zweite Stapelbegrenzungsstruktur 14 ist zu der ersten Stapelbegrenzungsstruktur 13 mit einem festen Abstand 10A gegenüberliegend angeordnet, wie in Fig. 6 gezeigt. Die Pouchzellen 21 sind in einem Stapel 20 angeordnet, wie in Fig. 5 gezeigt. Der Stapel 20 ist zwischen der ersten Stapelbegrenzungsstruktur 13 und der zweiten Stapelbegrenzungsstruktur 14 angeordnet. Eine Höhe 20H des Stapels 20 in einer Stapelrichtung z ist durch die erste Stapelbegrenzungsstruktur 13 und die zweite Stapelbegrenzungsstruktur 14 begrenzt. Die Sensoranordnung 30 ist in dem Stapel 20 angeordnet, wie in Fig. 4 gezeigt. Des Weiteren erstreckt die Sensoranordnung 30 sich über einen Großteil einer Fläche 21F der Pouchzellen 21 und ist derart ausgebildet, dass die Höhe 20H des Stapels 20 über die Erstreckung etwa gleich ist. Außerdem weist die Sensoranordnung 30 einen Drucksensor 31 auf. Der Drucksensor 31 ist zur Erfassung, insbesondere Messung, einer Druckkraft DF in der Stapelrichtung z wirkend auf die Pouchzellen 21 ausgebildet.

Im gezeigten Ausführungsbeispiel weist der Akkupack 1 zehn Pouchzellen 21 auf. In alternativen Ausführungsbeispielen kann der Akkupack mindestens zwei Pouchzellen aufweisen.

Weiter erstrecken im gezeigten Ausführungsbeispiel die erste Stapelbegrenzungsstruktur 13 und die zweite Stapelbegrenzungsstruktur 14 sich jeweils in zu der Stapelrichtung z orthogonalen Richtungen x, y. Zudem ist im gezeigten Ausführungsbeispiel der Abstand 10A in der Stapelrichtung z. Des Weiteren gleicht im gezeigten Ausführungsbeispiel die Höhe 20H dem Abstand 10A. Außerdem erstrecken im gezeigten Ausführungsbeispiel die Pouchzellen 21 sich jeweils in den zu der Stapelrichtung z orthogonalen Richtungen x, y.

Weiter erstreckt im gezeigten Ausführungsbeispiel die Sensoranordnung 30 sich in den zu der Stapelrichtung z orthogonalen Richtungen x, y. Zudem erstreckt im gezeigten Ausführungsbeispiel die Sensoranordnung 30 sich über die komplette Fläche 21F der Pouchzellen 21. Des Weiteren weist im gezeigten Ausführungsbeispiel die Sensoranordnung 30 eine gleiche Anordnungsdicke 30D in der Stapelrichtung z über die Erstreckung auf.

In Fig. 1 bis 11 ist die Sensoranordnung 30 einstückig ausgebildet.

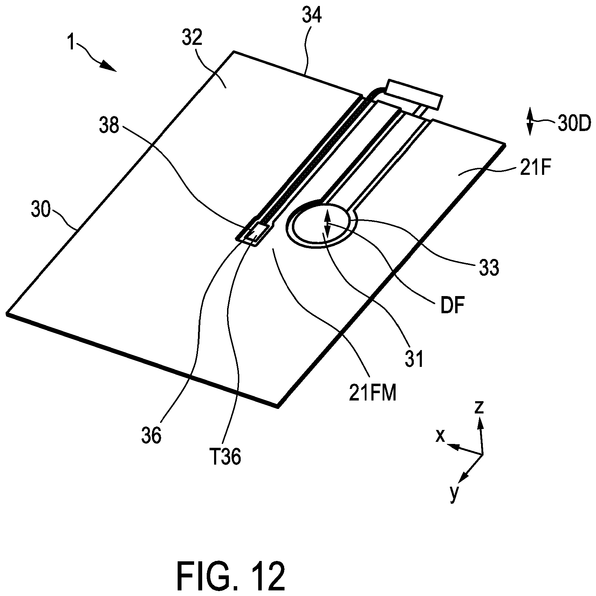

In Fig. 12 weist die Sensoranordnung 30 einen Ausgleichsabstandshalter 32 auf. Der Ausgleichsabstandshalter 32 ist in dem Stapel 20 angeordnet. Des Weiteren ist der Ausgleichsabstandshalter 32 getrennt von dem Drucksensor 31 ausgebildet. Außerdem weist der Ausgleichsabstandshalter 32 mindestens eine Sensoraussparung 33, 38 auf. Der Drucksensor 31 ist in der Sensoraussparung 33 angeordnet. Eine Abstandshalterdicke 32D des Ausgleichsabstandshalters 32 und eine Sensordicke 31D des Drucksensors 31 in der Stapelrichtung z sind etwa gleich.

Weiter ist in Fig. 1 bis 11 die Sensoranordnung 30 eine Folie 35. In Fig. 12 weist die Sensoranordnung 30 eine Folie 34 auf, insbesondere ist der Ausgleichsabstandshalter 32 die Folie 34.

Zudem weist die Sensoranordnung 30 einen, insbesondere inneren, Temperatursensor 36 auf, wie in Fig. 4 und 12 gezeigt. Der Temperatursensor 36 ist zur Messung einer, insbesondere inneren, Temperatur T36 des Stapels 20 ausgebildet.

In Fig. 12 ist der innere Temperatursensor 36 in der Sensoraussparung 38 angeordnet. Eine Sensordicke 36D des inneren Temperatursensors 36 ist etwa gleich der Abstandshalterdicke 32D des Ausgleichsabstandshalters 32 und der Sensordicke 31D des Drucksensors 31 in der Stapelrichtung z.

Des Weiteren ist die Sensoranordnung 30 zwischen zwei, im gezeigten Ausführungsbeispiel in der Stapelrichtung z mittigen, der Pouchzellen 21 angeordnet.

Zusätzlich sind der Drucksensor 31 und der, insbesondere innere, Temperatursensor 36 in einer Mitte 21 FM der Fläche 21F der Pouchzellen 21 angeordnet.

In anderen Worten: der Drucksensor 31 und der, insbesondere innere, Temperatursensor 36 sind an einem Schnittpunkt von Diagonalen des Stapels 20 angeordnet.

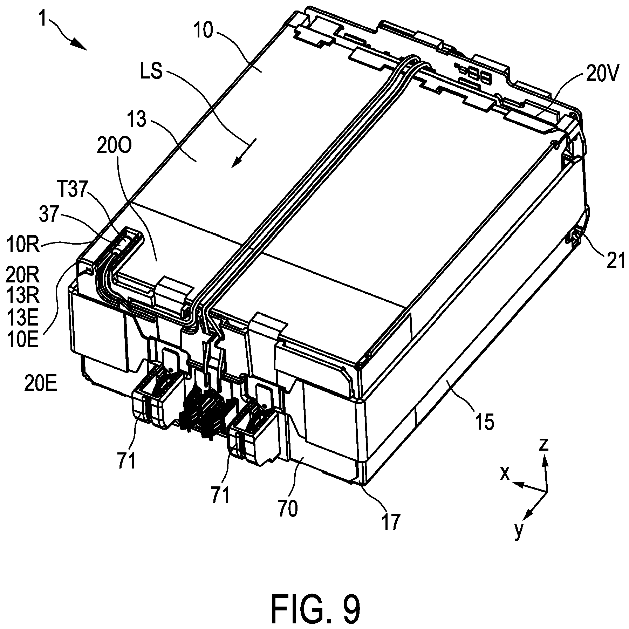

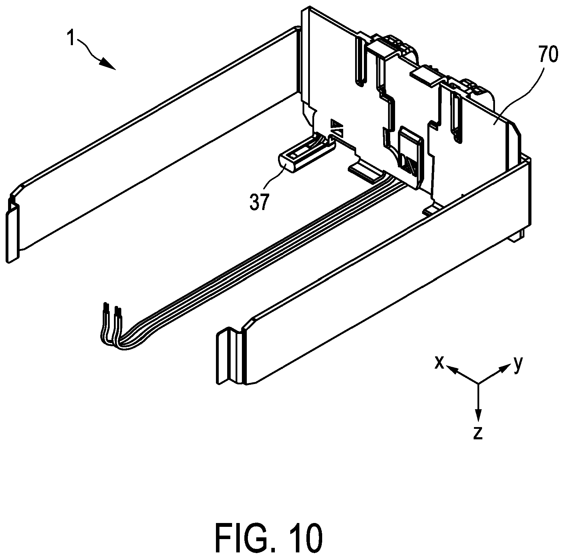

Außerdem weist der Akkupack einen äußeren Temperatursensor 37 auf, wie in Fig. 9 und 10 gezeigt. Der äußere Temperatursensor 37 ist zur Messung einer äußeren Temperatur T37 des Stapels 20 außerhalb des Stapels 20 an einem Rand 20R, 13R, insbesondere einer Ecke 20E, 13E, des Stapels 20 oder der ersten Stapelbegrenzungsstruktur 13 und/oder außerhalb der ersten Stapelbegrenzungsstruktur 13 angeordnet und ausgebildet.

In alternativen Ausführungsbeispielen kann der äußere Temperatursensor an einem Rand, insbesondere einer Ecke, der zweiten Stapelbegrenzungsstruktur und/oder außerhalb der zweiten Stapelbegrenzungsstruktur angeordnet sein.

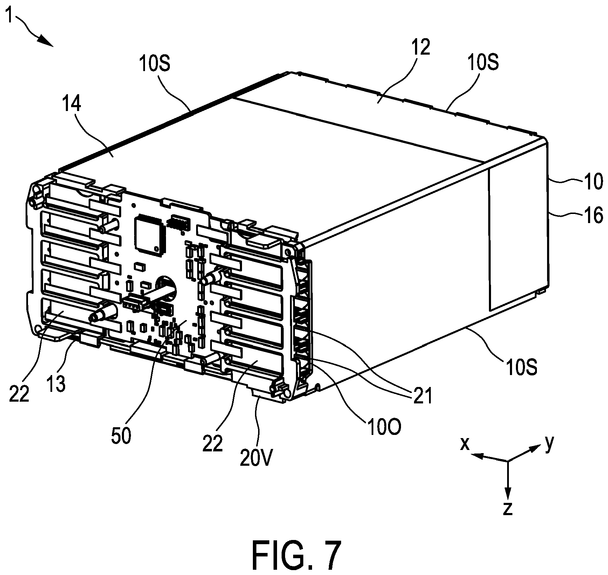

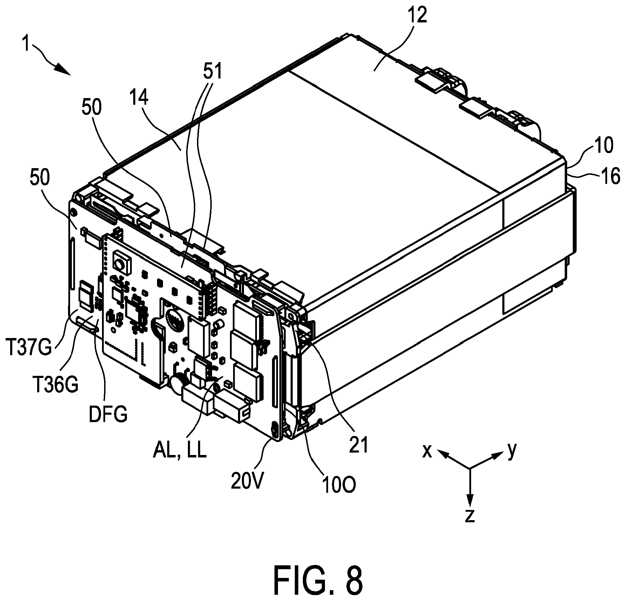

Weiter weist der Akkupack 1 eine Steuerungseinrichtung 50 auf, wie in Fig. 7 und 8 gezeigt. Die Steuerungseinrichtung 50 ist zur Steuerung des Akkupacks 1 in Abhängigkeit von der erfassten, insbesondere gemessenen, Druckkraft DF und der gemessenen, insbesondere inneren, Temperatur T36 und der gemessenen äußeren Temperatur T37 ausgebildet.

Insbesondere ist die Steuerungseinrichtung 50 mit dem Drucksensor 31, dem, insbesondere inneren, Temperatursensor 36 und dem äußeren Temperatursensor 37, insbesondere jeweils, elektrisch verbunden.

Des Weiteren ist im gezeigten Ausführungsbeispiel die Steuerungseinrichtung 50 zur Messung von Spannungen der Pouchzellen 21 ausgebildet und zur Steuerung des Akkupacks 1 in Abhängigkeit von den gemessenen Spannungen ausgebildet. Insbesondere ist die Steuerungseinrichtung 50 mit den Pouchzellen 21, insbesondere Zelltabs 22 der Pouchzellen 21, elektrisch verbunden.

Außerdem weist im gezeigten Ausführungsbeispiel die Steuerungseinrichtung 50 mindestens eine Leiterplatte auf.

Weiter ist im gezeigten Ausführungsbeispiel die Steuerungseinrichtung 50 zur Steuerung der Abgabe der elektrischen Antriebsleistung AL von dem Akkupack 1 und/oder einer Aufnahme einer elektrischen Ladeleistung LL durch den Akkupack 1 ausgebildet.

Im Detail weist der Akkupack 1 eine Leistungsabgabe- und/oder Leistungsaufnahmeerfassungseinrichtung 51 auf. Die Leistungsabgabe- und/oder Leistungsaufnahmeerfassungseinrichtung 51 ist zur Erfassung der abgegebenen elektrischen Antriebsleistung AL von dem Akkupack 1 und/oder der aufgenommenen elektrischen Ladeleistung LL durch den Akkupack 1 über der Zeit t ausgebildet. Die Steuerungseinrichtung 50 ist zum Vergleich der erfassten, insbesondere gemessenen, Druckkraft DF mit einem veränderlichen Druckgrenzwert DFG und zur Steuerung des Akkupacks 1 in Abhängigkeit von einem Ergebnis des Vergleichs ausgebildet. Des Weiteren ist die Steuerungseinrichtung 50 zur Veränderung, insbesondere Erhöhung, des Druckgrenzwerts DFG in Abhängigkeit von der erfassten abgegebenen Antriebsleistung AL und/oder der erfassten aufgenommenen Ladeleistung LL über der Zeit t ausgebildet.

In alternativen Ausführungsbeispielen kann die Steuerungseinrichtung zum Vergleich einer auf der erfassten Druckkraft basierenden Größe mit einem veränderlichen Druckgrenzwert ausgebildet sein.

Im gezeigten Ausführungsbeispiel ist der Druckgrenzwert DFG von mindestens einer der Pouchzellen 21 vorgegeben.

Außerdem ist im gezeigten Ausführungsbeispiel die Steuerungseinrichtung 50 zum Vergleich der gemessenen, insbesondere inneren, Temperatur T36 und/oder einer auf der gemessenen, insbesondere inneren, Temperatur T36 basierenden Größe mit einer, insbesondere inneren, Temperaturvergleichsgröße, insbesondere einem inneren Temperaturgrenzwert, T36G ausgebildet. Die, insbesondere innere, Temperaturvergleichsgröße T36G ist von mindestens einer, insbesondere mittigen, der Pouchzellen 21 abhängig, insbesondere vorgegeben. Des Weiteren ist die Steuerungseinrichtung 50 zur Steuerung des Akkupacks 1 in Abhängigkeit von einem Ergebnis des Vergleichs ausgebildet.

Weiter ist im gezeigten Ausführungsbeispiel die Steuerungseinrichtung 50 zum Vergleich der gemessenen äußeren Temperatur T37 und/oder einer auf der gemessenen äußeren Temperatur T37 basierenden Größe mit einer äußeren Temperaturvergleichsgröße, insbesondere einem äußeren Temperaturgrenzwert, T37G ausgebildet. Die äußere Temperaturvergleichsgröße T37G ist von mindestens einer, insbesondere äußersten, der Pouchzellen 21 abhängig, insbesondere vorgegeben. Weiter ist die Steuerungseinrichtung 50 zur Steuerung des Akkupacks 1 in Abhängigkeit von einem Ergebnis des Vergleichs ausgebildet.

Zusätzlich oder alternativ kann in alternativen Ausführungsbeispielen die Steuerungseinrichtung zum Vergleich einer Differenz der gemessenen, insbesondere inneren, Temperatur und der gemessenen äußeren Temperatur mit einer Temperaturvergleichsgröße, insbesondere einem Differenztemperaturgrenzwert, ausgebildet sein. Die Temperaturvergleichsgröße kann von mindestens einer der Pouchzellen abhängig, insbesondere vorgegeben, sein. Zudem kann die Steuerungseinrichtung zur Steuerung des Akkupacks in Abhängigkeit von einem Ergebnis des Vergleichs ausgebildet sein.

Des Weiteren ist im gezeigten Ausführungsbeispiel die Steuerungseinrichtung 50 auf einer Seite 20V, insbesondere Vorderseite, des Stapels 20, insbesondere an dem Stapel 20, angeordnet. Der äußere Temperatursensor 37 ist auf einer abgewandten Seite 200, insbesondere Oberseite, des Stapels 20, insbesondere an einem maximal entfernten Rand 20R, 13R des Stapels 20 oder der ersten Stapelbegrenzungsstruktur 13 angeordnet.

Außerdem weist im gezeigten Ausführungsbeispiel der Akkupack 1 mehrere Akkupackkontakte 71 auf. Die Akkupackkontakte 71 sind zur elektrischen Verbindung des Akkupacks 1 und des Bearbeitungsgeräts 101 miteinander zur Versorgung des Bearbeitungsgeräts 101 mit elektrischer Antriebsleistung AL von dem Akkupack 1 ausgebildet. Weiter weist der Akkupack 1 einen Akkupackkontaktträger 70 auf. Der Akkupackkontaktträger 70 trägt die Akkupackkontakte 71 und den äußeren Temperatursensor 37. Zudem ist der Akkupackkontaktträger 70 an der ersten Stapelbegrenzungsstruktur 13 und der zweiten Stapelbegrenzungsstruktur 14 angeordnet.

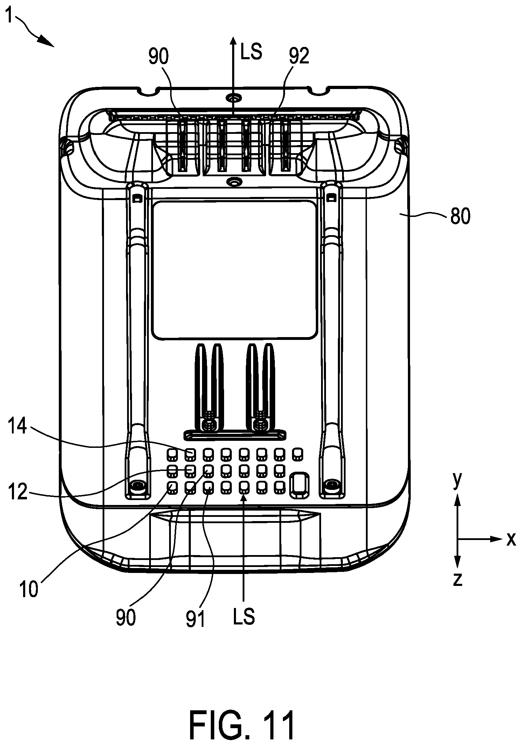

Des Weiteren weist im gezeigten Ausführungsbeispiel der Akkupack 1 ein Akkupackgehäuse 80 auf, wie in Fig. 11 gezeigt. Die Pouchzellen 21, und insbesondere die erste Stapelbegrenzungsstruktur 13, die zweite Stapelbegrenzungsstruktur 14, die Sensoranordnung 30, der äußere Temperatursensor 37, die Steuerungseinrichtung 50, die Leistungsabgabe- und/oder Leistungsaufnahmeerfassungseinrichtung 51 und der Akkupackkontaktträger 70, sind innerhalb des Akkupackgehäuses 80 angeordnet. Außerdem weist der Akkupack 1 mindestens einen Luftkühlkreislauf 90 aufweisend eine Anzahl von Lufteinlassöffnungen 91 und eine Anzahl von Luftauslassöffnungen 92 in dem Akkupackgehäuse 80 für eine Kühlluftströmung LS von der Anzahl von Lufteinlassöffnungen 91 an den Pouchzellen 21, insbesondere der ersten Stapelbegrenzungsstruktur 13 und/oder der zweiten Stapelbegrenzungsstruktur 14, vorbei zu der Anzahl von Luftauslassöffnungen 92 zur Kühlung der Pouchzellen 21 auf. Der äußere Temperatursensor 37 ist in dem Luftkühlkreislauf 90 zwischen der Anzahl von Lufteinlassöffnungen 91 und der Anzahl von Luftauslassöffnungen 92, insbesondere der Anzahl von Lufteinlassöffnungen 91 und/oder der Anzahl von Luftauslassöffnungen 92 zugewandt, angeordnet.

Weiter weist der Akkupack 1 ein, insbesondere massives, Stapelgehäuse 10 auf. Die erste Stapelbegrenzungsstruktur 13 ist eine erste Gehäusewand des Stapelgehäuses 10 und die zweite Stapelbegrenzungsstruktur 14 ist eine zweite Gehäusewand des Stapelgehäuses 10.

Im gezeigten Ausführungsbeispiel weist das Stapelgehäuse 10 ein erstes Gehäuseteil 11 und ein zweites Gehäuseteil 12 auf. Der Stapel 20 ist zwischen dem ersten Gehäuseteil 11 und dem zweiten Gehäuseteil 12 angeordnet. Das erste Gehäuseteil 11 und das zweite Gehäuseteil 12 sind durch mindestens eine stoffschlüssige Verbindung 10S, insbesondere eine Schweißverbindung, miteinander mechanisch verbunden.

Insbesondere weist im gezeigten Ausführungsbeispiel das Stapelgehäuse 10 fünf Gehäusewände 13, 14, 15, 16, 17 auf. Das erste Gehäuseteil 11 weist die erste Gehäusewand bzw. Oberseitenwand 13, die Gehäusewand, insbesondere Umfangsseitenwand, 15 und die Gehäusewand, insbesondere die Rückseitenwand, 17 auf. Das zweite Gehäuseteil 12 weist die zweite Gehäusewand bzw. Unterseitenwand 14 und die Gehäusewand, insbesondere Umfangsseitenwand, 16 auf.

Zudem weist im gezeigten Ausführungsbeispiel das Stapelgehäuse 10 eine thermische Verbindung mit den Pouchzellen 21 auf und ist thermisch leitfähig.

Insbesondere berührt das Stapelgehäuse 10, insbesondere berühren die Gehäusewände 13, 14, 15, 16, 17, die Pouchzellen 21 und zwischen den Pouchzellen 21 und den Gehäusewänden 15, 16, 17 ist Wärmeleitpaste.

Des Weiteren weist im gezeigten Ausführungsbeispiel das Stapelgehäuse 10 eine, insbesondere durch die Gehäusewände 13, 14, 15, 16 definierte, gemeinsame Gehäuseöffnung 100 auf. Die Pouchzellen 21 sind derart ausgebildet und in dem Stapel 20 innerhalb des Stapelgehäuses 10 angeordnet, dass die Zelltabs 22 auf der Vorderseite bzw. gemeinsamen Tabseite 20V des Stapels 20 an der gemeinsamen Gehäuseöffnung 100 angeordnet sind.

Außerdem weist der Akkupack 1 mindestens ein Pufferelement 60 auf. Das mindestens eine Pufferelement 60 ist in dem Stapel 20 angeordnet. Weiter erstreckt das mindestens eine Pufferelement 60 sich über einen Großteil der Fläche 21F der Pouchzellen 21 und ist dazu ausgebildet, über eine Pufferdicke 60D des mindestens einen Pufferelements 60 ein Aufblähen, soweit vorhanden, der Pouchzellen 21 in der Stapelrichtung z zu puffern.

Im gezeigten Ausführungsbeispiel weist der Akkupack 1 fünf Pufferelemente 60 auf. In alternativen Ausführungsbeispielen kann der Akkupack nur ein einziges Pufferelement aufweisen.

Insbesondere sind im gezeigten Ausführungsbeispiel zwischen jeweils zwei der Pufferelemente 60 zwei der Pouchzellen 21 angeordnet.

Zudem erstreckt im gezeigten Ausführungsbeispiel das mindestens eine Pufferelement 60 sich in den zu der Stapelrichtung z orthogonalen Richtungen x, y. Des Weiteren erstreckt im gezeigten Ausführungsbeispiel das mindestens eine Pufferelement 60 sich über die komplette Fläche 21F der Pouchzellen 21. Außerdem weist im gezeigten Ausführungsbeispiel das mindestens eine Pufferelement 60, insbesondere zeitlich vor einem Puffern, eine gleiche Pufferdicke 60D in der Stapelrichtung z über die Erstreckung auf.

Zusätzlich ist im gezeigten Ausführungsbeispiel das mindestens eine Pufferelement 60 eine thermische Isolierung.

Wenn Zelldicken 21D der Pochzellen 21 verursacht durch ein Aufblähen der Pouchzellen 21 zunehmen, das Aufblähen durch das mindestens eine Pufferelement 60 nicht mehr gepuffert werden kann, und die Druckkraft DF sich somit aufbaut, erfasst dies der Drucksensor 31.

Weiter sind im gezeigten Ausführungsbeispiel die Zelltabs 22 und die Steuerungseinrichtung 50 durch, insbesondere wärmeleitfähige, Vergussmasse eingeschlossen. Die Vergussmasse reicht bis zu Außenhüllen der Pouchzellen 21 hin.

Zudem weist im gezeigten Ausführungsbeispiel der Akkupack 1 eine maximale elektrische Antriebsleistung MAL von 3 kW auf. In alternativen Ausführungsbeispielen kann der Akkupack eine maximale elektrische Antriebsleistung von minimal 1 kW und/oder von maximal 10 kW aufweisen.

Zusätzlich weist im gezeigten Ausführungsbeispiel der Akkupack 1 eine Nennspannung NSP von 36 V auf. In alternativen Ausführungsbeispielen kann der Akkupack eine Nennspannung von minimal 10 V und/oder von maximal 100 V aufweisen.

Zusätzlich weist im gezeigten Ausführungsbeispiel der Akkupack 1 einen maximalen Energieinhalt MEI von 337 Wh auf. In alternativen Ausführungsbeispielen kann der Akkupack einen maximalen Energieinhalt von minimal 100 Wh und/oder von maximal 1000 Wh aufweisen. Zusätzlich weist im gezeigten Ausführungsbeispiel der Akkupack 1 eine Masse m1 von 2 kg auf. In alternativen Ausführungsbeispielen kann der Akkupack eine Masse von minimal 0,5 kg und/oder von maximal 10 kg aufweisen.

Zusätzlich weist im gezeigten Ausführungsbeispiel der Akkupack 1 eine Höhe 1H, insbesondere in der Stapelrichtung z, von 5 cm, eine Breite 1B, insbesondere in der Richtung x, von 10 cm, und eine Tiefe 1T, insbesondere in der Richtung y, von 15 cm auf. In alternativen Ausführungsbeispielen kann der Akkupack eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm aufweisen.

Fig. 1 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 1 ist das elektrisch angetriebene Bearbeitungsgerät 101 eine Säge 101' ein Trennschleifer 101" oder ein Blasgerät 101‴. In alternativen Ausführungsbeispielen kann das Bearbeitungsgerät ein Hoch-Entaster, ein Freischneider, eine Heckenschere, ein Heckenschneider, ein Laubbläser, eine Astschere, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, wobei der Akkupack verbesserte Eigenschaften aufweist, insbesondere eine relativ lange Lebensdauer hat, und ein Bearbeitungssystem aufweisend einen solchen Akkupack und ein elektrisch angetriebenes Bearbeitungsgerät bereit. - - - - - - - -

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- eine erste Stapelbegrenzungsstruktur (13) und eine zweite Stapelbegrenzungsstruktur (14), wobei die zweite Stapelbegrenzungsstruktur (14) zu der ersten Stapelbegrenzungsstruktur (13) mit einem festen Abstand (10A) gegenüberliegend angeordnet ist,
- mehrere Pouchzellen (21), wobei die Pouchzellen (21) in einem Stapel (20) angeordnet sind, wobei der Stapel (20) zwischen der ersten Stapelbegrenzungsstruktur (13) und der zweiten Stapelbegrenzungsstruktur (14) angeordnet ist und eine Höhe (20H) des Stapels (20) in einer Stapelrichtung (z) durch die erste Stapelbegrenzungsstruktur (13) und die zweite Stapelbegrenzungsstruktur (14) begrenzt ist, und
- eine Sensoranordnung (30), wobei die Sensoranordnung (30) in dem Stapel (20) angeordnet ist, wobei die Sensoranordnung (30) sich über einen Großteil einer Fläche (21F) der Pouchzellen (21) erstreckt, wobei ein Großteil der Fläche (21F) mindestens 70 % der Fläche (21F) bedeutet, und derart ausgebildet ist, dass die Höhe (20H) des Stapels (20) über die Erstreckung etwa gleich ist, und wobei die Sensoranordnung (30) einen Drucksensor (31) aufweist, wobei der Drucksensor (31) zur Erfassung einer Druckkraft (DF) in der Stapelrichtung (z) wirkend auf die Pouchzellen (21) ausgebildet ist.

2. Akkupack (1) nach Anspruch 1,
- wobei die Sensoranordnung (30) einstückig ausgebildet ist.

3. Akkupack (1) nach Anspruch 1,
- wobei die Sensoranordnung (30) einen Ausgleichsabstandshalter (32) aufweist, wobei der Ausgleichsabstandshalter (32) in dem Stapel (20) angeordnet ist, wobei der Ausgleichsabstandshalter (32) getrennt von dem Drucksensor (31) ausgebildet ist und wobei der Ausgleichsabstandshalter (32) eine Sensoraussparung (33) aufweist, wobei der Drucksensor (31) in der Sensoraussparung (33) angeordnet ist, wobei eine Abstandshalterdicke (32D) des Ausgleichsabstandshalters (32) und eine Sensordicke (31D) des Drucksensors (31) in der Stapelrichtung (z) etwa gleich sind.

4. Akkupack nach einem der vorhergehenden Ansprüche,
- wobei die Sensoranordnung (30) eine Folie (34, 35) aufweist.

5. Akkupack (1) nach einem der vorhergehenden Ansprüche,
- wobei die Sensoranordnung (30) einen Temperatursensor (36) aufweist, wobei der Temperatursensor (36) zur Messung einer Temperatur (T36) des Stapels (20) ausgebildet ist.

6. Akkupack (1) nach einem der vorhergehenden Ansprüche,
- wobei die Sensoranordnung (30) zwischen zwei der Pouchzellen (21) angeordnet ist, und/oder
- wobei der Drucksensor (31) und/oder der Temperatursensor (36) in einer Mitte (21FM) der Fläche (21F) der Pouchzellen (21) angeordnet sind/ist.

7. Akkupack (1) nach einem der vorhergehenden Ansprüche, wobei der Akkupack (1) aufweist:
- einen äußeren Temperatursensor (37), wobei der äußere Temperatursensor (37) zur Messung einer äußeren Temperatur (T37) des Stapels (20) außerhalb des Stapels (20) an einem Rand (20R, 13R) des Stapels (20), der ersten Stapelbegrenzungsstruktur (13) oder der zweiten Stapelbegrenzungsstruktur und/oder außerhalb der ersten Stapelbegrenzungsstruktur (13) oder der zweiten Stapelbegrenzungsstruktur angeordnet und ausgebildet ist.

8. Akkupack (1) nach einem der vorhergehenden Ansprüche, wobei der Akkupack (1) aufweist:
- eine Steuerungseinrichtung (50), wobei die Steuerungseinrichtung (50) zur Steuerung des Akkupacks (1) in Abhängigkeit von der erfassten Druckkraft (DF) und/oder der gemessenen Temperatur (T36) und/oder der gemessenen äußeren Temperatur (T37) ausgebildet ist.

9. Akkupack (1) nach Anspruch 8, wobei der Akkupack (1) aufweist:
- eine Leistungsabgabe- und/oder Leistungsaufnahmeerfassungseinrichtung (51), wobei die Leistungsabgabe- und/oder Leistungsaufnahmeerfassungseinrichtung (51) zur Erfassung der abgegebenen elektrischen Antriebsleistung (AL) und/oder einer aufgenommenen elektrischen Ladeleistung (LL) über der Zeit (t) ausgebildet ist,
- wobei die Steuerungseinrichtung (50) zum Vergleich der erfassten Druckkraft (DF) und/oder einer auf der erfassten Druckkraft (DF) basierenden Größe mit einem veränderlichen Druckgrenzwert (DFG) und zur Steuerung des Akkupacks (1) in Abhängigkeit von einem Ergebnis des Vergleichs ausgebildet ist, wobei die Steuerungseinrichtung (50) zur Veränderung des Druckgrenzwerts (DFG) in Abhängigkeit von der erfassten abgegeben Antriebsleistung (AL) und/oder der erfassten aufgenommenen Ladeleistung (LL) über der Zeit (t) ausgebildet ist.

10. Akkupack (1) nach einem der vorhergehenden Ansprüche, wobei der Akkupack (1) aufweist:
- mindestens ein Pufferelement (60), wobei das mindestens eine Pufferelement (60) in dem Stapel (20) angeordnet ist, wobei das mindestens eine Pufferelement (60) sich über einen Großteil der Fläche (21F) der Pouchzellen (21) erstreckt und dazu ausgebildet ist, über eine Pufferdicke (60D) des mindestens einen Pufferelements (60) ein Aufblähen der Pouchzellen (21) in der Stapelrichtung (z) zu puffern.

11. Akkupack (1) nach einem der vorhergehenden Ansprüche, wobei der Akkupack (1) aufweist:
- ein Stapelgehäuse (10), wobei die erste Stapelbegrenzungsstruktur (13) eine erste Gehäusewand des Stapelgehäuses (10) ist und die zweite Stapelbegrenzungsstruktur (14) eine zweite Gehäusewand des Stapelgehäuses (10) ist.

12. Akkupack (1) nach einem der vorhergehenden Ansprüche,
- wobei der Akkupack (1) eine maximale elektrische Antriebsleistung (MAL) von minimal 1 kW und/oder von maximal 10 kW aufweist, und/oder
- wobei der Akkupack (1) eine Nennspannung (NSP) von minimal 10 V und/oder von maximal 100 V aufweist, und/oder
- wobei der Akkupack (1) einen maximalen Energieinhalt (MEI) von minimal 100 Wh und/oder von maximal 1000 Wh aufweist, und/oder
- wobei der Akkupack (1) eine Masse (m1) von minimal 0,5 kg und/oder von maximal 10 kg aufweist, und/oder
- wobei der Akkupack (1) eine Höhe (1H) von minimal 2,5 cm und/oder von maximal 10 cm, und/oder eine Breite (1B) von minimal 5 cm und/oder von maximal 20 cm, und/oder eine Tiefe (1T) von minimal 7,5 cm und/oder von maximal 30 cm aufweist.

13. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

14. Bearbeitungssystem (100) nach Anspruch 13,
- wobei das Bearbeitungsgerät (101) eine Akkuaufnahme (102) aufweist, wobei die Akkuaufnahme (102) zum Aufnehmen des Akkupacks (1) ausgebildet ist.

15. Bearbeitungssystem (100) nach Anspruch 13 oder 14,
- wobei das Bearbeitungsgerät (101) eine Säge (101'), ein Hoch-Entaster, ein Freischneider, eine Heckenschere, ein Heckenschneider, ein Blasgerät (101‴), ein Laubbläser, eine Astschere, ein Trennschleifer (101"), ein Kehrgerät, eine Kehrwalze, eine Kehrbürste, ein Rasenmäher, ein Vertikutierer oder eine Grasschere ist.

## Claims

1. Battery pack (1) for supplying an electrically driven treatment apparatus (101) with an electric driving power (AL), the battery pack (1) comprising:
- a first stack limiting structure (13) and a second stack limiting structure (14), wherein the second stack limiting structure (14) is disposed opposite and with a fixed distance (10A) to the first stack limiting structure (13),
- a plurality of pouch cells (21), wherein the pouch cells (21) are disposed in a stack (20), wherein the stack (20) is disposed between the first stack limiting structure (13) and the second stack limiting structure (14) and a height (20H) of the stack (20) in a stack direction (z) is limited by the first stack limiting structure (13) and the second stack limiting structure (14), and
- a sensor arrangement (30), wherein the sensor arrangement (30) is disposed in the stack (20), wherein the sensor arrangement (30) extends across a major part of a surface (21F) of the pouch cells (21), wherein a major part of the surface (21F) means at least 70 % of the surface (21F), and is configured such that the height (20H) of the stack (20) across the extension is approximately equal, and wherein the sensor arrangement (30) has a pressure sensor (31), wherein the pressure sensor (31) is configured for detecting a pressure force (DF) acting in the stack direction (z) on the pouch cells (21).

2. Battery pack (1) according to claim 1,
- wherein the sensor arrangement (30) has a one piece design.

3. Battery pack (1) according to claim 1,
- wherein the sensor arrangement (30) has a compensation spacer (32), wherein the compensation spacer (32) is disposed in the stack (20), wherein the compensation spacer (32) is separate from the pressure sensor (31), and wherein the compensation spacer (32) has a sensor recess (33), wherein the pressure sensor (31) is disposed in the sensor recess (33), wherein a spacer thickness (32D) of the compensation spacer (32) and a sensor thickness (31D) of the pressure sensor (31) in the stack direction (z) are approximately equal.

4. Battery pack (1) according to any of the preceding claims,
- wherein the sensor arrangement (30) includes a film (34, 35).

5. Battery pack (1) according to any of the preceding claims,
- wherein the sensor arrangement (30) has a temperature sensor (36), wherein the temperature sensor (36) is configured for measuring a temperature (T36) of the stack (20).

6. Battery pack (1) according to any of the preceding claims,
- wherein the sensor arrangement (30) is disposed between two pouch cells (21), and/or
- wherein the pressure sensor (31) and/or the temperature sensor (36) are/is disposed in a center (21FM) of the surface (21F) of the pouch cells (21).

7. Battery pack (1) according to any of the preceding claims, the battery pack (1) comprising:
- an outer temperature sensor (37), wherein the outer temperature sensor (37) is disposed and configured for measuring an outer temperature (T37) of the stack (20) outside the stack (20) at an edge (20R, 13R) of the stack (20), the first stack limiting structure (13) or the second stack limiting structure (14), and/or outside the first stack limiting structure (13) or the second stack limiting structure (14).

8. Battery pack (1) according to any of the preceding claims, the battery pack (1) comprising:
- a control device (50), wherein the control device (50) is configured for controlling the battery pack (1) in response to the detected pressure force (DF) and/or the measured temperature (T36) and/or the measured outer temperature (T37).

9. Battery pack (1) according to claim 8, the battery pack (1) comprising:
- a power output and/or power input detection device (51), wherein the power output and/or power input detection device (51) is configured for detecting the output electric driving power (AL) and/or an input electric charging power (LL) over the time (t),
- wherein the control device (50) is configured for comparison of the detected pressure force (DF) and/or a quantity based on the detected pressure force (DF) to a variable pressure limit value (DFG) and for controlling the battery pack (1) in response to a result of the comparison, wherein the control device (50) is configured for varying the pressure limit value (DFG) in response to the detected output driving power (AL) and/or the detected input charging power (LL) over the time (t).

10. Battery pack (1) according to any of the preceding claims, the battery pack (1) comprising:
- at least one buffer element (60), wherein the at least one buffer element (60) is disposed in the stack (20), wherein the at least one buffer element (60) extends across a major part of the surface (21F) of the pouch cells (21) and is configured to buffer inflating of the pouch cells (21) in the stack direction (z) across a buffer thickness (60D) of the at least one buffer element (60).

11. Battery pack (1) according to any of the preceding claims, the battery pack (1) comprising:
- a stack housing (10), wherein the first stack limiting structure (13) is a first housing wall of the stack housing (10), and the second stack limiting structure (14) is a second housing wall of the stack housing (10).

12. Battery pack (1) according to any of the preceding claims,
- wherein the battery pack (1) has a maximum electric driving power (MAL) of a minimum of 1 kW and/or of a maximum of 10 kW, and/or
- wherein the battery pack (1) has a nominal voltage (NSP) of a minimum of 10 V and/or of a maximum of 100 V, and/or
- wherein the battery pack (1) has a maximum energy content (MEI) of a minimum of 100 Wh and/or of a maximum of 1000 Wh, and/or
- wherein the battery pack (1) has a mass (m1) of a minimum of 0.5 kg and/or of a maximum of 10 kg, and/or
- wherein the battery pack (1) has a height (1H) of a minimum of 2.5 cm and/or of a maximum of 10 cm, and/or a width (1B) of a minimum of 5 cm and/or of a maximum of 20 cm, and/or a depth (1T) of a minimum of 7.5 cm and/or of a maximum of 30 cm.

13. Treatment system (100), the treatment system (100) comprising:
- a battery pack (1) according to any of the preceding claims, and
- an electrically driven treatment apparatus (101),
- wherein the battery pack (1) and the treatment apparatus (101) are configured for electrical connection with each other for supplying the treatment apparatus (101) with electric driving power (AL) from the battery pack (1).

14. Treatment system (100) according to claim 13,
- wherein the treatment apparatus (101) has a battery accommodation (102), wherein the battery accommodation (102) is configured for accommodating the battery pack (1).

15. Treatment system (100) according to claim 13 or 14,
- wherein the treatment apparatus (101) is a saw (101'), a pole pruner, a clearing saw, a brush cutter, hedge shears, a hedge cutter, a blower device (101‴), a leaf blower, a lopper, a cutoff grinder (101"), a sweeper device, a sweeper roller, a sweeper brush, a lawn mower, a dethatcher or a grass trimmer.

## Revendications

1. Bloc d'accumulateur (1) permettant d'alimenter un appareil de traitement à entraînement électrique (101) ayant une puissance d'entraînement électrique (AL), le bloc d'accumulateur (1) présentant :
- une première structure de limitation d'empilement (13) et une deuxième structure de limitation d'empilement (14), la deuxième structure de limitation d'empilement (14) étant disposée à l'opposé de la première structure de limitation d'empilement (13) à une distance fixe (10A),
- plusieurs cellules de poche (21), les cellules de poche (21) étant disposées dans un empilement (20), l'empilement (20) étant disposé entre la première structure de limitation d'empilement (13) et la deuxième structure de limitation d'empilement (14), et une hauteur (20H) de l'empilement (20) dans une direction d'empilement (z) étant limitée par la première structure de limitation d'empilement (13) et la deuxième structure de limitation d'empilement (14), et
- un agencement de capteur (30), l'agencement de capteur (30) étant disposé dans un empilement (20), l'agencement de capteur (30) s'étendant sur une majeure partie d'une superficie (21F) des cellules de poche (21), la majeure partie de la superficie (21F) signifiant au moins 70 % de la superficie (21F) et étant réalisée de telle sorte que la hauteur (20H) de l'empilement (20) est approximativement identique sur l'étendue, et l'agencement de capteur (30) présentant un capteur de pression (31), le capteur de pression (31) étant réalisé pour détecter une force de pression (DF) agissant sur les cellules de poche (21) dans la direction d'empilement (z) .

2. Bloc d'accumulateur (1) selon la revendication 1,
- dans lequel l'agencement de capteur (30) est réalisé d'un seul tenant.

3. Bloc d'accumulateur (1) selon la revendication 1,
- dans lequel l'agencement de capteur (30) présente un écarteur de compensation (32), l'écarteur de compensation (32) étant disposé dans l'empilement (20), l'écarteur de compensation (32) étant réalisé séparément du capteur de pression (31), et l'écarteur de compensation (32) présentant un évidement de capteur (33), dans lequel le capteur de pression (31) est disposé dans l'évidement de capteur (33), une épaisseur d'écarteur (32D) de l'écarteur de compensation (32) et une épaisseur de capteur (31D) du capteur de pression (31) étant approximativement identiques dans la direction d'empilement (z).

4. Bloc d'accumulateur selon l'une des revendications précédentes,
- dans lequel l'agencement de capteur (30) présente un film (34, 35).

5. Bloc d'accumulateur (1) selon l'une quelconque des revendications précédentes,
- dans lequel l'agencement de capteur (30) présente un capteur de température (36), le capteur de température (36) étant réalisé pour mesurer une température (T36) de l'empilement (20).

6. Bloc d'accumulateur (1) selon l'une quelconque des revendications précédentes,
- dans lequel l'agencement de capteur (30) est disposé entre deux cellules de poche (21), et/ou
- dans lequel le capteur de pression (31) et/ou le capteur de température (36) est/sont disposé(s) au centre (21FM) de la superficie (21F) des cellules de poche (21).

7. Bloc d'accumulateur (1) selon l'une quelconque des revendications précédentes, le bloc d'accumulateur (1) présentant :
- un capteur de température extérieur (37), dans lequel le capteur de température extérieur (37) est disposé et réalisé pour mesurer une température extérieure (T37) de l'empilement (20) à l'extérieur de l'empilement (20) au niveau d'un bord (20R, 13R) de l'empilement (20), de la première structure de limitation d'empilement (13) ou de la deuxième structure de limitation d'empilement et/ou à l'extérieur de la première structure de limitation d'empilement (13) ou de la deuxième structure de limitation d'empilement.

8. Bloc d'accumulateur (1) selon l'une quelconque des revendications précédentes, le bloc d'accumulateur (1) présentant :
- un dispositif de commande (50), le dispositif de commande (50) étant réalisé pour commander le bloc d'accumulateur (1) en fonction de la force de pression (DF) détectée et/ou de la température mesurée (T36) et/ou de la température extérieure mesurée (T37).

9. Bloc d'accumulateur (1) selon la revendication 8, le bloc d'accumulateur (1) présentant :
- un dispositif de détection de puissance fournie et/ou de puissance absorbée (51), le dispositif de détection de puissance fournie et/ou de puissance absorbée (51) étant réalisé pour détecter la puissance d'entraînement électrique (AL) fournie et/ou une puissance de chargement électrique (LL) absorbée en fonction du temps (t),
- dans lequel le dispositif de commande (50) est réalisé pour comparer la force de pression (DF) détectée et/ou une grandeur basée sur la force de pression (DF) détectée avec une valeur limite de pression variable (DFG) et pour commander le bloc d'accumulateur (1) en fonction d'un résultat de la comparaison, dans lequel le dispositif de commande (50) est réalisé pour modifier la valeur limite de pression (DFG) en fonction de la puissance d'entraînement fournie (AL) détectée et/ou de la puissance de chargement absorbée (LL) détectée en fonction du temps (t).

10. Bloc d'accumulateur (1) selon l'une quelconque des revendications précédentes, le bloc d'accumulateur (1) présentant :
- au moins un élément tampon (60), ledit au moins un élément tampon (60) étant disposé dans l'empilement (20), ledit au moins un élément tampon (60) s'étendant sur une majeure partie de la superficie (21F) des cellules de poche (21) et étant réalisé pour tamponner sur une épaisseur de tampon (60D) dudit au moins un élément tampon (60) un gonflement des cellules de poche (21) dans la direction d'empilement (z).

11. Bloc d'accumulateur (1) selon l'une quelconque des revendications précédentes, le bloc d'accumulateur (1) présentant :
- un boîtier d'empilement (10), dans lequel la première structure de limitation d'empilement (13) est une première paroi de boîtier du boîtier d'empilement (10), et la deuxième structure de limitation d'empilement (14) est une deuxième paroi de boîtier du boîtier d'empilement (10).

12. Bloc d'accumulateur (1) selon l'une quelconque des revendications précédentes,
- dans lequel le bloc d'accumulateur (1) présente une puissance d'entraînement électrique maximale (MAL) au minimum de 1 kW et/ou au maximum de 10 kW, et/ou
- dans lequel le bloc d'accumulateur (1) présente une tension nominale (NSP) au minimum de 10 V et/ou au maximum de 100 V, et/ou
- dans lequel le bloc d'accumulateur (1) présente un contenu en énergie maximal (MEI) au minimum de 100 Wh et/ou au maximum de 1000 Wh, et/ou
- dans lequel le bloc d'accumulateur (1) présente une masse (m1) au minimum de 0,5 kg et/ou au maximum de 10 kg, et/ou
- dans lequel le bloc d'accumulateur (1) présente une hauteur (1H) au minimum de 2,5 cm et/ou au maximum de 10 cm, et/ou une largeur (1B) au minimum de 5 cm et/ou au maximum de 20 cm, et/ou une profondeur (1T) au minimum de 7,5 cm et/ou au maximum de 30 cm.

13. Système de traitement (100), le système de traitement (100) présentant :
- un bloc d'accumulateur (1) selon l'une quelconque des revendications précédentes, et
- un appareil de traitement (101) à entraînement électrique,
- dans lequel le bloc d'accumulateur (1) et l'appareil de traitement (101) sont réalisés pour être reliés électriquement l'un à l'autre pour alimenter l'appareil de traitement (101) en puissance d'entraînement électrique (AL) à partir du bloc d'accumulateur (1).

14. Système de traitement (100) selon la revendication 13,
- dans lequel l'appareil de traitement (101) présente un logement d'accumulateur (102), le logement d'accumulateur (102) étant réalisé pour recevoir le bloc d'accumulateur (1).

15. Système de traitement (100) selon la revendication 13 ou 14,
- dans lequel l'appareil de traitement (101) est une scie (101'), une perche élagueuse, une débroussailleuse, une cisaille à haies, un taille-haie, un souffleur (101‴), un souffleur de feuilles, un sécateur, une tronçonneuse (101'), une balayeuse, une brosse de balayage, une tondeuse, un scarificateur ou une cisaille à gazon.
